# EUROPEAN PATENT APPLICATION

(11) **EP 1 746 602 A1**
(43) Date of publication of application: **24.01.2007**
(21) Application number: 06010540.0
(22) Date of filing: 22.05.2006
(51) Int. Cl.: G11B 33/12

(54) **Recording medium cover locking device of image photography apparatus**

(30) Priority: 19.07.2005 KR 20050065330
(71) Applicant: Samsung Electronics Co., Ltd., Suwon-si, Gyeonggi-Do (KR)
(72) Inventor: Kim, Myoung-joon 409-1301, Cheongmyeong-maeul, Yeongtong-gu Suwon-si Gyeonggi-do (KR); Kim, Bong-joo, Yeongtong-gu Suwon-si Gyeonggi-do (KR); Cho, Young-ho, Suwon-si Gyeonggi-do (KR)
(74) Representative: Grünecker, Kinkeldey, Stockmair & Schwanhäusser Anwaltssozietät

(57) **Abstract**

A recording medium cover locking device of the image photography apparatus according to the embodiment of the present invention comprising a recording medium cover, that can open or close, provided in the image photography apparatus; a lock member for locking or unlocking an opening/closing operation of the recording medium cover; and a restriction unit for restricting a movement of the lock member to inhibit the recording medium cover from being opened white the image photography apparatus is operating in a specific mode. Accordingly, in the image photography apparatus employing the optical disk as the information recording medium, the recording medium cover is not opened while the image photography apparatus is operating in the specific mode, and so it is possible to prevent the optical disk from being damaged or disturbed while recording.

## Description

### BACKGROUND OF THE INVENTION

### 1. Field of the invention

An aspect of the present invention relates to an image photography apparatus such as a digital camera or a camcorder. More particularly, an aspect of the present invention relates to a recording medium cover locking device of the image photography apparatus using an optical disk such as a digital video disk (DVD) as a recording medium.

### 2. Description of the Related Art

The image photography apparatus is the apparatus which photographs a desired object, records it in the form of a still image or a moving image, and replays the recorded image. The image photography apparatus is provided with a recording medium cover locking device for locking or unlocking an opening/closing operation of a recording medium cover in which the information recording medium such as an optical disk is received.

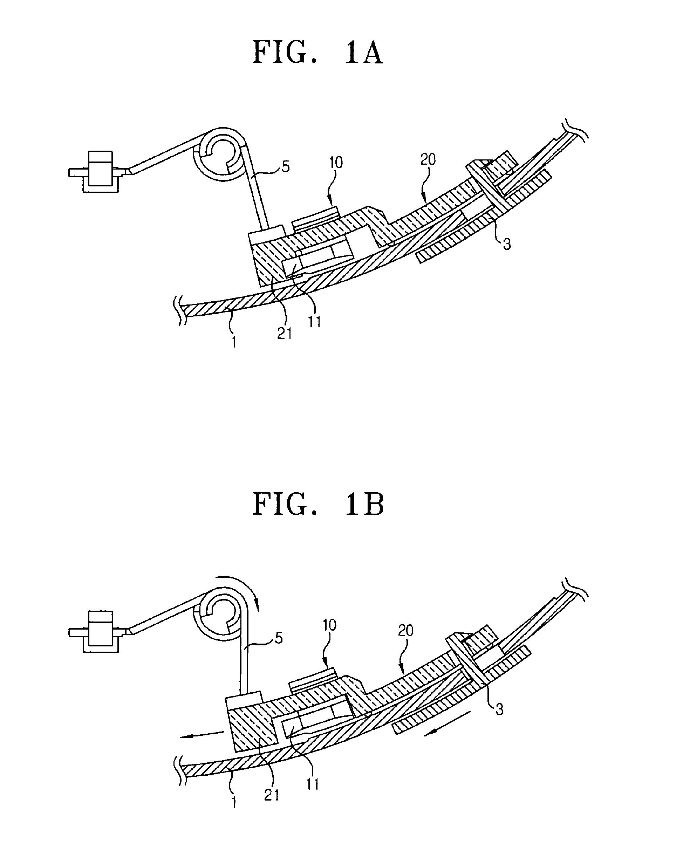

FIG. 1A and FIG. 1 B are diagrams illustrating a structure and an operation of a recording medium cover locking device of the conventional image photography apparatus. In the drawings, the reference numeral "10" indicates a recording medium cover and the reference numeral "20" indicates a lock member.

The recording medium cover 10, which can open or close, is installed at a main body 1 of the image photography apparatus that uses an optical disk (not shown) as the information recording medium. A first lock combining section 11 is provided on the inside of the recording medium cover 10 so as to engage with the lock member 20.

The lock member 20 is slidably installed in the main body 1. The lock member 20 is provided with a second lock combining section 21 to be combined (locked) with the first lock combining section 11 of the recording medium cover 10.

An operating button 3 is provided such that the operating button is connected to the lock member 20 for operating a movement of the lock member 20 and is exposed to the outside of the main body 1. Also, the main body 1 is connected to the lock member 20 through a spring 5, so the lock member 20 is returned to its original position after the lock member 20 is moved.

In the conventional recording medium cover locking device as described above, the user operates the operating button 3 to move the lock member 20 as shown in FIG. 1 B for drawing the optical disk (not shown) received in the main body 1 from the main body 1. Then, a lock combination between the first lock combining section 11 of the recording medium cover 10 and the second lock combining section 21 of the lock member 20 is released and the recording medium cover 10 is opened, therefore making it possible to draw the optical disk.

In the conventional recording medium cover locking device as described above, however, it is possible to open the recording medium cover by operating the operating button while the image photography apparatus is operating in a specific mode, for example, a recording mode. Accordingly, the recording medium cover locking device has drawbacks in that the optical disk can be damaged and disturbances may occur during a recording procedure.

### SUMMARY OF THE INVENTION

Aspects of the present invention provide a recording medium cover locking device of a image photography apparatus which prevents the recording medium cover from being opened while the image photography apparatus is operating in a specific mode, for example, in a recording mode.

Additional aspects and/or advantages of the invention will be set forth in part in the description which follows and, in part, will be obvious from the description, or may be learned by practice of the invention.

According to an aspect of the present invention, there is provided a recording medium cover locking device of an image photography apparatus comprising a recording medium cover, that can open or close, installed at a main body of the image photography apparatus; a lock member for locking or unlocking an opening/closing operation of the recording medium cover; and a restriction unit for restricting a movement of the lock member to inhibit the recording medium cover from being opened while the image photography apparatus is operating in the specific mode.

Also, the restriction unit comprises a solenoid having an operating section moved forward and backward according to an On/Off operation; a mode detecting sensor for sensing whether an operating signal of the specific mode is received or not; and a control section for controlling an On/Off operation of the solenoid according to the signal detected by the mode detecting sensor.

According to another aspect of the present invention,, the solenoid is installed in the main body such that the operating section is moved forward and backward in a direction which is substantially parallel with the movement direction of the lock member.

According to another aspect of the present invention, the solenoid is installed in the main body such that the operating section is moved forward and backward in a direction which is substantially perpendicular to the slide direction of the lock member.

Also, the control section turns on the solenoid when the mode detecting sensor detects the specific mode operating signal, and the control section turns off the solenoid when the mode detecting sensor detects mode operating signals other than the specific mode operating signal.

### BRIEF DESCRIPTION OF THE DRAWING FIGURES

These and/or other aspects and advantages of the invention will become apparent and more readily appreciated from the following description of the embodiments, taken in conjunction with the accompanying drawings of which:
FIG. 1A and FIG. 1B are views illustrating a structure and an operation of a recording medium cover locking device of the conventional image photography apparatus;
FIG. 2 is a view showing schematically a recording medium cover locking device of an image photography apparatus according to an embodiment of the present invention;
FIG. 3A and FIG. 3B are views illustrating an operation of the recording medium cover locking device of the image photography apparatus shown in FIG. 2; and
FIG. 4 is a view showing schematically the recording medium cover locking device of the image photography apparatus according to another embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

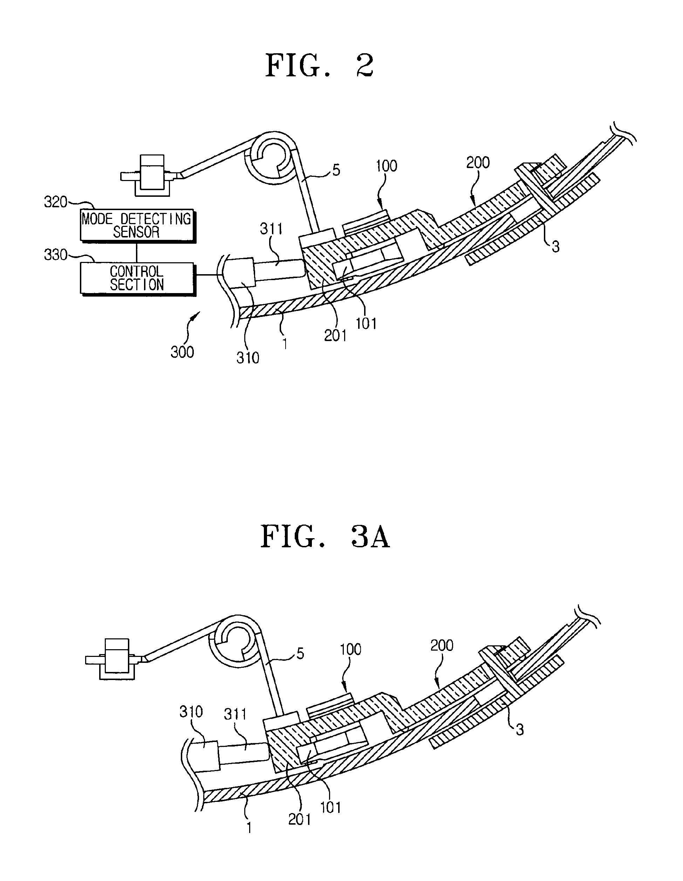

FIG. 2 is a view showing schematically a recording medium cover locking device of the image photography apparatus according to an embodiment of the present invention. In the drawing, the reference numeral "100" indicates a recording medium cover, the reference numeral "200" indicates a lock member, and the reference numeral "300" indicates a restriction unit.

The recording medium cover 100, which can open and close, is installed in the main body 1 of the image photography apparatus which uses an optical disk (not shown) as the information recording medium. A first lock combining section 101 is provided on the inside of the recording medium cover 100, and can connect with the lock member 200.

The lock member 200 is slidably installed in the main body 1. For example, although not shown in the drawing, the structure in which a long hole is formed on the lock member in the slide direction, a fixing pin is passed through the long hole and fixed to the main body can be embodied. The lock member 200 is provided with a second lock combining section 201 to be combined (locked) with the first lock combining section 101 of the recording medium cover 100.

The operating button 3 is provided so that it is connected to the lock member 200 for operating a movement of the lock member 200 and is exposed to the outside of the main body 1.

Also, the main body 1 is connected to the lock member 200 through an elastic member 5, for example a spring, returning the lock member 200 to its original position after the lock member 200 is moved.

The restriction unit 300 is provided with a solenoid 310, a mode detecting sensor 320, and a control section 330.

The solenoid 310 is an electronic switch having an operating section 311 moved forward and backward according to the On/Off operation. The solenoid 310 is installed in the main body 1 such that the operating section 311 is moved forward and backward in the direction which is parallel with the movement direction of the lock member 200.

The mode detecting sensor 320 senses whether an operating signal of the specific mode (for example, the recoding mode) is received or not.

The control section 330 controls the On/Off operation of the solenoid 310 according to the signal detected by the mode detecting sensor 320. Once the specific mode operating signal is detected by the mode detecting sensor 320, the control section 330 makes the operating section 311 of the solenoid 310 move forward to restrict a movement of the lock member 200. And, once other mode operating signals are detected, the control section makes the operating section 311 of the solenoid 310 move backward to release a restriction of the lock member 200

By adding the restriction unit 300 to the conventional device, the recording medium cover locking device of the image photography apparatus of this embodiment constituted as described above prevents the recording medium cover 100 from being opened while the image photography apparatus is operating in the specific mode.

To put it concretely, as shown in FIG. 3A, while the image photography apparatus is operating in the specific mode, for example, in the recording mode, the mode detecting sensor 320 of the restriction unit 300 detects the specific mode operating signal and transmits it to the control section 330. The control section 330 turns on the solenoid 310, causing the operating section 311 to move forward to restrict a movement of the lock member 200. At this time, although the user operates the operating button 3 for drawing the optical disk from the recording medium cover 100 while the image photography apparatus is operating in the specific mode, the lock member 200 is prevented from moving by the solenoid 310 of the restriction unit 300. Therefore, the recording medium cover 100 is maintained in the lock state while the image photography apparatus is operating in the specific mode, and the recording medium cover 100 is not opened.

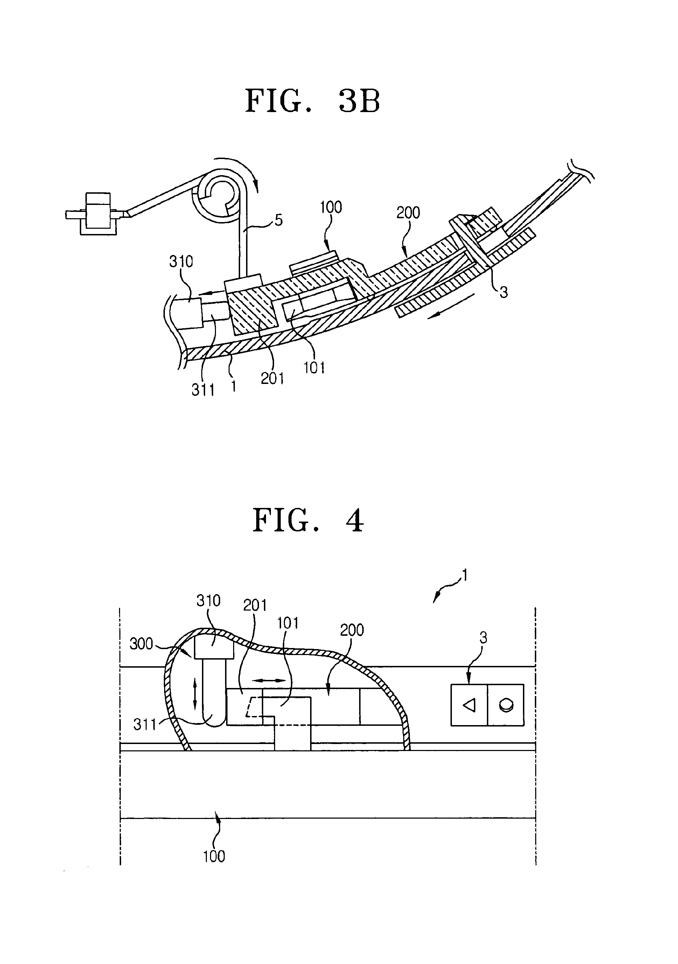

As shown in FIG. 3B, however, while the image photography apparatus is operating in any mode other than the specific mode, the mode detecting sensor 320 of the restriction unit 300 detects the operating signal of that mode and transmits the operating signal to the control section 330. The control section 330 turns off the solenoid 310 and the operating section 311 is moved backward to release the restriction of the lock member 200. At this time, if the user operates the operating button 3 for drawing the optical disk from the recording medium cover 100 while the image photography apparatus is operating in any mode other than the specific mode, the lock member 200 can be slid.

FIG. 4 is a view showing schematically the recording medium cover locking device of the image photography apparatus according to another embodiment of the present invention. In FIG. 4, the reference numeral "100" indicates the recording medium cover, the reference numeral "200" indicates the lock member, and the reference numeral "300" indicates the restriction unit.

The recording medium cover 100, the lock member 200, and the restriction unit 300 in this embodiment and the previous embodiment have the same general structures. However, the solenoid 310 of the restriction unit 300 is installed in the main body 1 for making the operating section 311 move in the direction which is perpendicular to the slide direction of the lock member 200.

While the image photography apparatus is operating in the specific mode, the restriction force against the movement of the lock member 200 is exceedingly increased since the operating section 311 of the solenoid 310 is operated at a right angle to the movement direction of the lock member 200.

According to the embodiments of the present invention as described above, in an image photography apparatus employing an optical disk as the information recording medium, the recording medium cover is not opened while the image photography apparatus is operating in the specific mode, and so the present invention is advantageous in that it is possible to prevent the optical disk from being damaged and disturbed while recording.

Although a few embodiments of the present invention have been shown and described, it would be appreciated by those skilled in the art that changes may be made in this embodiment without departing from the principles and spirit of the invention, the scope of which is defined in the claims and their equivalents.

## Claims

1. A recording medium cover locking device of an image photography apparatus with multiple modes having corresponding operating signals and a recording medium cover with an opening/closing operation, the recording medium cover locking device comprising:
a lock member to lock and unlock an opening/closing operation of the recording medium cover; and
a restriction unit to restrict a movement of the lock member to inhibit the recording medium cover from being opened while the image photography apparatus is operating in a specific one of the multiple modes.

2. The recording medium cover locking device as claimed in claim 1, wherein the restriction unit comprises:
a mode detecting sensor to sense whether the operating signal of the specific mode is received; and
a control section to control an operation of the restriction unit according to the operating signal detected by the mode detecting sensor.

3. The recording medium cover locking device as claimed in claim 2, wherein the control section designates an On operation of the restriction unit when the mode detecting sensor detects the operating signal of a specific mode, and the control section designates an Off operation of the restriction unit when the mode detecting sensor does not detect the operating signal of the specific mode.

4. The recording medium cover locking device as claimed in claim 2, wherein the restriction unit further comprises:
a solenoid having an operating section moved forward and backward to prevent a movement of the lock member according to the operation of the control section.

5. The recording medium cover locking device as claimed in claim 4, wherein the solenoid is installed in the main body such that the operating section is moved forward and backward in a direction which is substantially parallel to a movement direction of the lock member.

6. The recording medium cover locking device as claimed in claim 4, wherein the solenoid is installed in the main body such that the operating section is moved forward and backward in a direction which is substantially perpendicular to a movement direction of the lock member.

7. The recording medium cover locking device as claimed in claim 1, wherein the specific mode is a recording mode of the image photography apparatus.

8. A method of restricting a movement of a recording medium cover of an image photography apparatus, the method comprising:
detecting an operating signal of a specific operating mode of the image photography apparatus; and
restricting a movement of the recording medium cover according to the operating signal detected.
